# EUROPEAN PATENT APPLICATION

(11) **EP 4 394 668 A1**
(43) Date of publication of application: **03.07.2024**
(21) Application number: 21959481.9
(22) Date of filing: 01.10.2021
(51) Int. Cl.: G06Q 10/02

(54) **INFORMATION PROCESSING DEVICE, INFORMATION PROCESSING METHOD, AND PROGRAM**

(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP)
(74) Representative: D Young & Co LLP
(86) International application number: PCT/JP2021/036438
(87) International publication number: WO 2023/053447

(57) **Abstract**

An information processing apparatus which enables a robot with advantageous conditions to be used when using a reserved robot is provided. The information processing apparatus includes: a reservation accepting unit 21 which accepts a reservation for using an unfixed robot from a user; an authority granting unit 22 which grants access authority to the robot to the user on a date and time of use designated by the reservation having been accepted by the reservation accepting unit 21; and a selecting unit 23 which selects, based on reservation information related to the reservation and a status of the robot, the robot to be used by the user having been granted the access authority from one or more of the robots corresponding to the reservation.

## Description

### Technical Field

The present invention relates to an information processing apparatus, an information processing method, and a program.

### Background Art

In recent years, robots to be operated from remote locations via networks have been developed. Patent Document 1 below discloses a technique related to a robot which does shopping, carries luggage, or the like on behalf of a user at a remote location. In Patent Document 1, when a user reserves a robot, the reservation is made by selecting a specific robot.

### Citation List

### Patent Document

Patent Document 1: WO 2020/059493

### Summary

### Technical Problem

A robot may require charging and maintenance and a place of arrangement of the robot may change after use by each user. Therefore, when using a robot for which a reservation has been made, there may be a robot with more advantageous conditions than the reserved robot. However, a reservation method that enables a robot with advantageous conditions to be used has not been established.

The present invention has been made in order to solve the problem described above and an object of the invention is to provide an information processing apparatus, an information processing method, and a program which enable a robot with advantageous conditions to be used when using a reserved robot.

### Solution to Problem

An information processing apparatus representing an aspect of the present invention includes: a reservation accepting unit which accepts a reservation for using an unfixed robot from a user; an authority granting unit which grants access authority to the robot to the user on a date and time of use designated by the reservation having been accepted by the reservation accepting unit; and a selecting unit which selects, based on reservation information related to the reservation and a status of the robot, the robot in a status suitable for use by the user having been granted the access authority from one or more of the robots corresponding to the reservation.

According to the aspect, access authority to a robot on a reserved date and time of use is granted to a user and the robot to be used by the user can be selected from robots corresponding to the reservation based on a status of the robots at the time point of the reserved date and time of use. Therefore, when a robot for which a reservation has been made is to be used by the user, a robot with advantageous conditions at the time point can be used.

In the aspect described above, the reservation accepting unit may accept the reservation by having the user specify a location where the robot is to be used and the date and time of use. According to the aspect, a robot with advantageous conditions at the time point of use can be assigned to the user from robots conforming to the location where the robot is to be used.

In the aspect described above, the information processing apparatus may further include a storage unit which stores identification information of one or more of the robots in association with a location where the robot is to be used, wherein the reservation accepting unit may present the user with a reservation slot that is set for each location where the robot is to be used and accept the reservation based on the reservation slot. According to the aspect, a reservation can be accepted for each location where the robot is to be used, and when the robot is to be subsequently used, a robot with advantageous conditions at the time point of use can be assigned to the user from robots conforming to the reserved location.

In the aspect described above, the status of the robot may include at least any of a start-up status of the robot, a charge status of the robot, a communication status of the robot, and a utilization status of the robot. According to the aspect, since a robot can be selected based on at least any of the start-up status of the robot, the charge status of the robot, the communication status of the robot, and the utilization status of the robot at the time point of use of the robot, an optimal robot at the time point of use can be assigned to the user.

An information processing method representing another aspect of the present invention is a method to be executed by a processor, the method including: accepting a reservation for using an unfixed robot from a user; granting access authority to the robot to the user on a date and time of use designated by the accepted reservation; and selecting, based on reservation information related to the reservation and a status of the robot, the robot to be used by the user having been granted the access authority from one or more of the robots corresponding to the reservation.

According to the aspect, access authority to a robot on a reserved date and time of use is granted to a user and the robot to be used by the user can be selected from robots corresponding to the reservation based on a status of the robots at the time point of the reserved date and time of use. Therefore, when a robot for which a reservation has been made is to be used by the user, a robot with advantageous conditions at the time point can be used.

A program representing another aspect of the present invention causes a computer to execute: accepting a reservation for using an unfixed robot from a user; granting access authority to the robot to the user on a date and time of use designated by the accepted reservation; and selecting, based on reservation information related to the reservation and a status of the robot, the robot to be used by the user having been granted the access authority from one or more of the robots corresponding to the reservation.

According to the aspect, access authority to a robot on a reserved date and time of use is granted to a user and the robot to be used by the user can be selected from robots corresponding to the reservation based on a status of the robots at the time point of the reserved date and time of use. Therefore, when a robot for which a reservation has been made is to be used by the user, a robot with advantageous conditions at the time point can be used.

### Advantageous Effects of Invention

According to the present invention, an information processing apparatus, an information processing method, and a program which enable a robot with advantageous conditions to be used when using a reserved robot can be provided.

### Brief Description of Drawings

Fig. 1 is a diagram illustrating a configuration of a system including a server apparatus according to an embodiment.
Fig. 2 is a block diagram illustrating a functional configuration of the server apparatus according to the embodiment.
Fig. 3 is a schematic diagram for describing a mechanism of a reservation using a reservation slot.
Fig. 4 is a schematic diagram for describing a mechanism of selecting a robot at a reserved date and time of use.
Fig. 5 is a sequence chart for describing a processing procedure when making a reservation in order to use a robot.
Fig. 6 is a sequence chart for describing a processing procedure of selecting a robot to be used by the user at a reserved date and time of use.
Fig. 7 is a block diagram illustrating a hardware configuration of the server apparatus according to the embodiment.
Fig. 8 is a block diagram illustrating a hardware configuration of a robot according to the embodiment.

### Description of Embodiments

Hereinafter, an embodiment of the present invention will be described. Note that the embodiment described below is for illustrative purposes only and is not intended to limit the present invention thereto. In addition, various modifications may be made to the present invention without departing from the scope of the invention. It will thus be appreciated that those skilled in the art will be able to adopt embodiments in which the respective elements described below are replaced by equivalents and that such embodiments will also fall within the scope of the present invention. Furthermore, while an embodiment in which the present invention is realized using an information processing apparatus (or a computer) will be described below as an example in order to facilitate understanding, the present invention is not limited thereto.

### [System configuration]

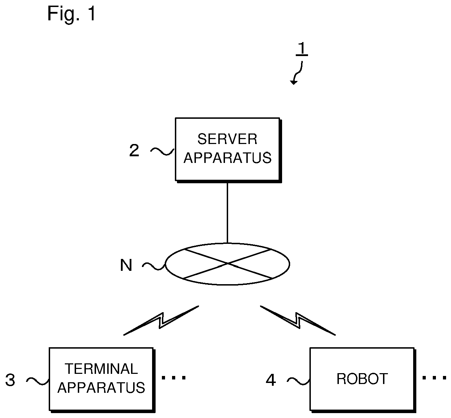

An exemplary configuration of a system including a server apparatus according to an embodiment will be described with reference to Fig. 1. In the present embodiment, for example, a system 1 is capable of performing processing such as searching for a robot 4 that is usable and making a reservation in order to use the robot 4.

As shown in Fig. 1, the system 1 includes a server apparatus 2, one or more terminal apparatuses 3, and one or more robots 4. Each apparatus or robot is configured to be capable of communicating with other apparatuses or robots in a wireless or wired manner (or both). The respective terminal apparatuses 3 may have similar configurations or different configurations. The respective robots 4 may have similar configurations or different configurations. Hereinafter, outlines of each apparatus and each robot will be described.

The server apparatus 2 is an apparatus which executes, for example, reservation processing in order to use the robot 4 and the like. The server apparatus 2 is constituted of an information processing apparatus such as a server computer. The server apparatus 2 may be constituted of one information processing apparatus or a plurality of information processing apparatuses (for example, cloud computing or edge computing).

The terminal apparatus 3 is an information processing apparatus that is used by the user to operate the robot 4 or to reserve the robot 4. For example, the terminal apparatus 3 is a general-purpose or dedicated information processing apparatus such as a smartphone, a tablet terminal, a PDA (Personal Digital Assistants), a personal computer, a head-mounted display, or an application-specific operating system.

The robot 4 is an unfixed robot. For example, being "unfixed" includes cases where the robot 4 is a mobile robot which includes a drive unit such as wheels that enables the robot to move and cases where the robot 4 is a wearable robot which can be worn by a person and which includes a drive unit such as a manipulator that enables the robot to operate.

For example, mobile robots include those which travel on one wheel, two wheels, or multiple wheels, those which travel on a caterpillar, those which travel on rails, those which move by jumping, those which travel on two legs, four legs, or multiple legs, those which navigate on water or underwater, and those which fly using a propeller or the like.

For example, wearable robots include a robot disclosed in MHD Yamen Saraiji, Tomoya Sasaki, Reo Matsumura, Kouta Minamizawa, and Masahiko Inami, "Fusion: full body surrogacy for collaborative communication," Proceeding SIGGRAPH '18 ACM SIGGRAPH 2018 Emerging Technologies Article No. 7.

The robot 4 also includes the following: a robot which is installed on a vehicle, heavy machinery, a drone, or an aircraft capable of automated travel or semi-automated travel or installed in a sports stadium or the like and which is equipped with a camera capable of moving on rails; and a satellite-type robot which is launched into outer space and which is capable of attitude control and controlling a direction of photography of a camera. In addition, the robot 4 may be a so-called telepresence robot or an avatar robot.

The user performs operations of the robot 4 (for example, a movement of the robot 4 and an operation of a camera mounted to the robot 4) via the terminal apparatus 3. A signal for operating the robot 4 is transmitted to the robot 4 from the terminal apparatus 3 via the server apparatus 2 or another apparatus. Alternatively, a signal for performing the operation may be directly transmitted to the robot 4 from the terminal apparatus 3. The robot 4 operates in accordance with the received signal and transmits, to the terminal apparatus 3, data acquired or detected by the robot 4 regarding a place where the robot 4 is present such as image data and audio data acquired through the camera, a microphone, or other apparatuses mounted to the robot 4. Accordingly, through the terminal apparatus 3 and the robot 4, the user can enjoy an experience that makes the user feel as though he/she is also present at the place where the robot 4 is present. The data transmitted from the robot 4 may be transmitted to the terminal apparatus 3 via the server apparatus 2 or another apparatus or may be directly transmitted to the terminal apparatus 3.

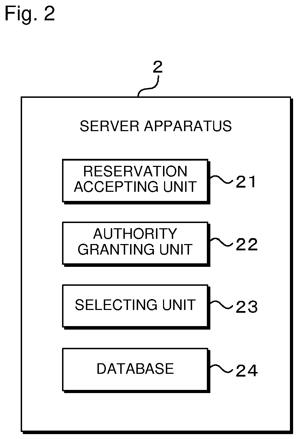

Functional components of the server apparatus 2 will be described with reference to Fig. 2. The functions are realized as a processor (control unit) of the server apparatus 2 reads and executes a computer program stored in a storage apparatus (storage unit). A hardware configuration of the server apparatus 2 will be described later.

As shown in Fig. 2, for example, the server apparatus 2 includes a reservation accepting unit 21, an authority granting unit 22, a selecting unit 23, and a database 24 as functional components. The functions of the server apparatus 2 are not limited thereto and the server apparatus 2 may include functions generally included in a computer as well as other functions.

The reservation accepting unit 21 executes reservation processing of accepting and confirming a reservation in order to use the robot 4 from a user. When making the reservation, the user designates a location where the robot 4 is to be used, a date and time of use of the robot 4, and the like. The reservation accepting unit 21 confirms the reservation based on the location and the date and time of use designated by the user.

The location where the robot 4 is to be used can be optionally set for, for example, each situation in which the robot 4 is to be used or each place where the robot 4 is to be used. For example, situations in which the robot 4 is to be used include events, exhibitions, rides at amusement parks, shopping, conferences, and virtual experiences. For example, places where the robot 4 is to be used include each event space provided at an event venue, each exhibition area provided in an exhibition hall, each ride at an amusement park, each store in a shopping facility, each conference room in an office building, and each venue of a virtual experience.

In addition, as a location where the robot 4 is to be used, for example, a location for staff responsible for carrying out inspections, maintenance, and the like on the robot 4 may be separately provided. In the location for the staff, the staff is desirably limited to users capable of using the robot 4.

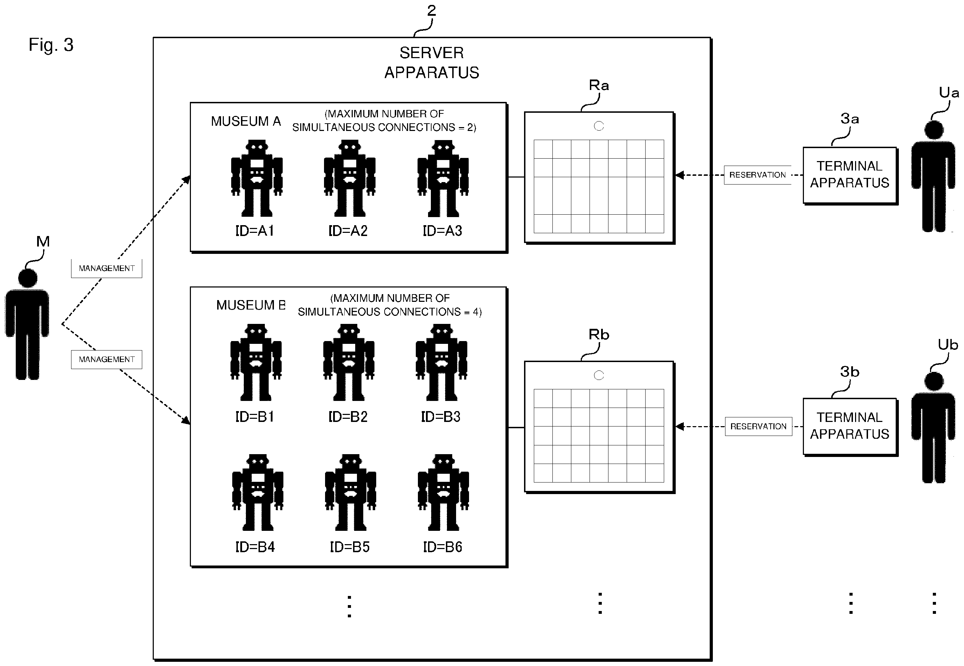

The user is made to designate a date and time of use of the robot 4 using, for example, a reservation slot which is set for each location where the robot 4 is to be used. For example, the reservation slot can be optionally set in units of a prescribed period of time such as 30 minutes or 1 hour. The reservation slot will be described in specific terms with reference to Fig. 3.

Fig. 3 illustrates lists Ra and Rb of reservation slots to be set by operating the server apparatus 2 by a manager M who manages the system 1 or the robot 4. Fig. 3 illustrates Museum A in Japan and Museum B in France as locations where the robot 4 is to be used.

The reservation slots on the list Ra represent reservation slots corresponding to three robots 4 deployed at Museum A in Japan. The reservation slots on the list Rb represent reservation slots corresponding to six robots 4 deployed at Museum B in France.

Robot assignment information related to assignment of the robot 4 is registered in the database 24 of the server apparatus 2. For example, the robot assignment information includes a location where the robot 4 is to be used and a robot ID for identifying the robot 4 to be deployed to the location. One or more robots 4 can be registered for each location.

For example, three robots 4 are registered with respect to Museum A and A1, A2, and A3 are set as robot IDs of the respective robots 4. In addition, six robots 4 are registered with respect to Museum B and B1, B2, B3, B4, B5, and B6 are set as robot IDs of the respective robots 4.

Robot assignment information further includes a maximum number of robots to which a plurality of users can be simultaneously connected and which can be simultaneously operated by the users at each location.

For example, two robots are set as the maximum number of robots at Museum A. Therefore, at Museum A, a maximum of two robots 4 among the three robots 4 can be operated in a same time slot. In other words, at Museum A, a maximum number of users who can make reservations with respect to one reservation slot is two. In addition, four robots are set as the maximum number of robots at Museum B. Therefore, at Museum B, a maximum of fourth robots 4 among the six robots 4 can be operated in a same time slot. In other words, at Museum B, a maximum number of users who can make reservations with respect to one reservation slot is four.

Using such reservation slots, a user makes a reservation as follows.

For example, when a user Ua operates a terminal apparatus 3a to designate Museum A as a location where the robot 4 is to be used, the list Ra of reservation slots corresponding to Museum A is displayed on a screen of the terminal apparatus 3a.

When the user Ua operates the terminal apparatus 3a to perform a confirmation operation of a reservation by designating a reservation slot which has an opening for reservation and which is desired by the user Ua from the list Ra, the reservation by the user Ua with respect to the reservation slot of Museum A having been designated by the user Ua is confirmed. At this point, the robot 4 to be used by the user Ua is not determined. As will be described later, the robot 4 to be used by the user Ua is selected upon use of the robot 4 by the user Ua.

In a similar manner, when a user Ub operates a terminal apparatus 3b to designate Museum B as a location where the robot 4 is to be used, the list Rb of reservation slots corresponding to Museum B is displayed on a screen of the terminal apparatus 3b.

When the user Ub operates the terminal apparatus 3b to perform a confirmation operation of a reservation by designating a reservation slot which has an opening for reservation and which is desired by the user Ub from the list Rb, the reservation by the user Ub with respect to the reservation slot of Museum B having been designated by the user Ub is confirmed. At this point, the robot 4 to be used by the user Ub is not determined. As will be described later, the robot 4 to be used by the user Ub is selected upon use of the robot 4 by the user Ub.

When a reservation is confirmed as described above, reservation information related to the reservation is registered to the database 24 of the server apparatus 2. For example, the reservation information includes a user ID which identifies a user having made the reservation, location information which specifies a location where the robot 4 is to be used, date and time of use information including a time slot during which the robot 4 is to be used, and terminal information related to the terminal apparatus 3 used by the user having made the reservation.

Let us now return to the description of Fig. 2. When the date and time of use of a confirmed reservation arrives, the authority granting unit 22 grants the user having made the reservation access authority to the robot 4 being deployed to the reserved location.

Based on the reservation information and robot status information to be described later, the selecting unit 23 selects the robot 4 to be used by the user having been granted access authority from one or more robots 4 deployed at the reserved location.

**The** robot status information is information which is related to a status of each robot 4 and which is stored in the database 24 of the server apparatus 2 as the need arises. For example, the robot status information includes information which specifies a location where the robot 4 is being deployed, a robot ID, start-up status information of the robot 4, charge status information of the robot 4, communication status information of the robot 4, and utilization status information of the robot 4.

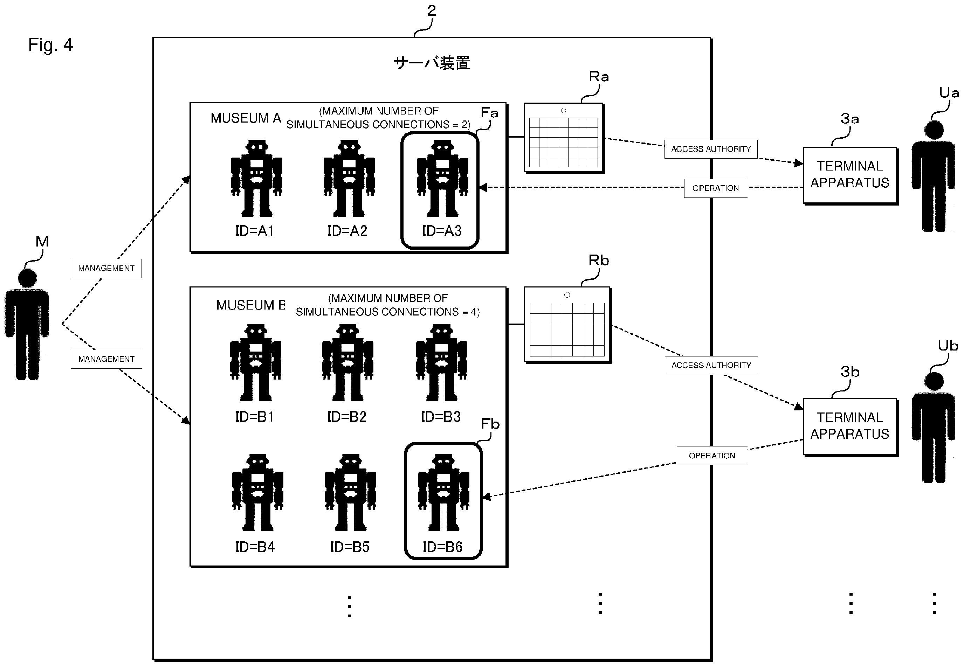

Selection of the robot 4 to be used by the user will be described in specific terms with reference to Fig. 4. In the drawing, robots 4 assigned to the users Ua and Ub having made reservations are enclosed by frames Fa and Fb and are displayed.

For example, when the reserved date and time of use arrives, the authority granting unit 22 of the server apparatus 2 grants a terminal apparatus 3a of the user Ua access authority in order to use the robot 4 at Museum A in Japan. On the other hand, the terminal apparatus 3b of the user Ub is granted access authority in order to use the robot 4 at Museum B in France.

In addition, the selecting unit 23 of the server apparatus 2 selects the robot 4 with a robot ID of A3 from the three robots 4 deployed at Museum A in Japan as the robot 4 to be used by the user Ua. During a period designated by the reservation, the selected robot 4 operates based on a command from the terminal apparatus 3a which is operated by the user Ua. Accordingly, the user Ua can enjoy an experience that makes the user feel as though he/she is also present at Museum A in Japan where the robot 4 is present.

**The** selecting unit 23 of the server apparatus 2 selects the robot 4 with a robot ID of B6 from the six robots 4 deployed at Museum B in France as the robot 4 to be used by the user Ub. During a period designated by the reservation, the selected robot 4 operates based on a command from the terminal apparatus 3b which is operated by the user Ub. Accordingly, the user Ub can enjoy an experience that makes the user feel as though he/she is also present at Museum B in France where the robot 4 is present.

When selecting the robot 4, the selecting unit 23 selects the robot 4 determined to be optimal based on the robot status information. Criteria for determining that the robot 4 is optimal are exemplified in (1) to (7) below.
(1) A currently operational robot is preferentially selected based on start-up status information of the robots 4.
(2) A robot with a large residual capacity of a battery is preferentially selected based on charge status information of the robots 4.
(3) A robot with high radio wave intensity of a communicating unit is preferentially selected based on communication status information of the robots 4.
(4) A robot having been recently charged or subjected to maintenance is preferentially selected based on utilization status information of the robots 4.
(5) A robot of which a failure flag is turned off is preferentially selected based on utilization status information of the robots 4.
(6) A robot for which an extended use from an immediately previous time slot has not been applied is preferentially selected based on utilization status information of the robots 4.
(7) A robot of which a currently deployed place is close to a position of a prescribed point of origin is preferentially selected based on utilization status information of the robots 4 (drop-off and the like of robots are taken into consideration).

**An** optimal robot 4 can be selected by appropriately combining criteria of (1) to (7) above. In doing so, a priority may be calculated by weighting each criterion and a robot with a highest priority may be selected.

Furthermore, in addition to the criteria described above, the robot 4 with high ability or the robot 4 of which a camera provides high performance may be preferentially selected.

Let us now return to the description of Fig. 2. The database 24 stores various types of data such as data necessary for processing executed by the server apparatus 2 and data generated or set by the processing. The various types of data include the robot assignment information, the reservation information, and the robot status information described above as well as robot information related to the robots 4 and user information related to users who use the robots 4. For example, robot information includes a robot ID, information related to ability of the robot 4, and information related to performance of the camera of the robot 4.

While functions of the server apparatus 2 have been described above with reference to Fig. 2, a part of or all of the functions described above may be realized as functions of the terminal apparatus 3 or the robot 4.

### [System operation]

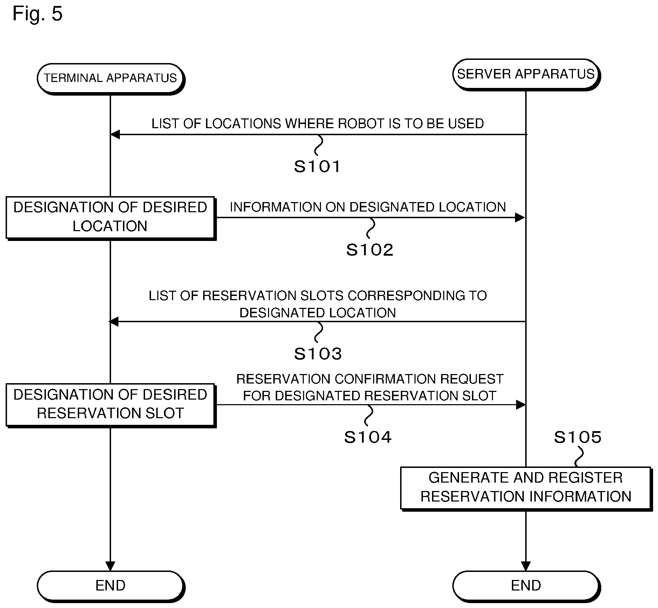

A processing procedure when making a reservation in order to use the robot 4 will be described with reference to Fig. 5. The processing procedure is realized in the server apparatus 2 and the terminal apparatus 3 as a processor reads and executes a computer program stored in a storage apparatus. Detailed descriptions of processing steps that have already been described in detail among the respective processing steps of the processing will be omitted.

The processing procedure starts when the user having logged into the system 1 operates the terminal apparatus 3 to request the server apparatus 2 to perform reservation processing of the robot 4.

First, the server apparatus 2 displays a list of locations where the robot 4 is to be used on a screen of the terminal apparatus 3 (step S101).

Next, as the user operates the terminal apparatus 3 and designates a desired location from the list of locations displayed on the screen, information on the designated location is transmitted to the server apparatus 2 (step S102).

Next, the server apparatus 2 displays a list of reservation slots corresponding to the location designated in step S102 described above on the screen of the terminal apparatus 3 (step S103).

Next, as the user operates the terminal apparatus 3, designates a reservation slot which has an opening for reservation and which is desired by the user from the list of reservation slots displayed on the screen, and requests confirmation of the reservation, a reservation confirmation request for the designated reservation slot is transmitted to the server apparatus 2 (step S104).

Next, based on the location designated in step S102 described above and the reservation slot designated in step S104 described above, the server apparatus 2 generates reservation information and registers the reservation information in the database 24 (step S105). Accordingly, the reservation by the user is confirmed.

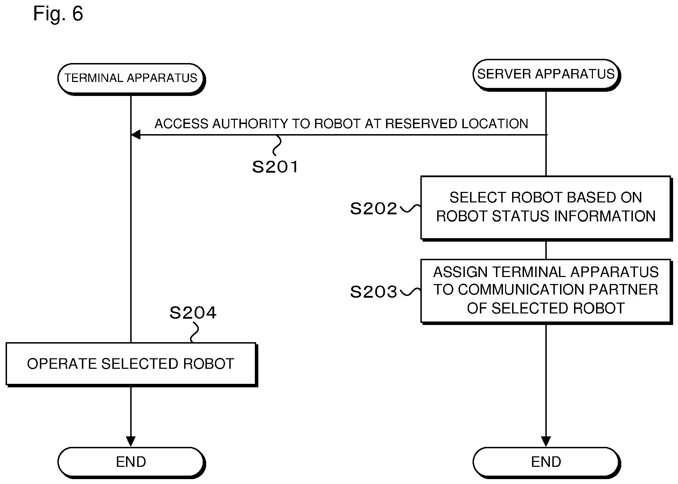

**A** processing procedure of selecting the robot 4 to be used by the user at a reserved date and time of use will be described with reference to Fig. 6. The processing procedure is realized in the server apparatus 2 and the terminal apparatus 3 as a processor reads and executes a computer program stored in a storage apparatus. Detailed descriptions of processing steps that have already been described in detail among the respective processing steps of the processing will be omitted.

The processing procedure starts when the user having logged into the system 1 operates the terminal apparatus 3 to request the use of the robot 4 to the server apparatus 2.

First, when a reserved date and time of use arrives, the server apparatus 2 grants the user having made the reservation access authority to the robot 4 being deployed to the reserved location (step S201).

Next, based on the robot status information, the server apparatus 2 selects the robot 4 to be used by the user having been granted access authority in step S201 described above from the robots 4 deployed at the reserved location (step S202).

Next, the server apparatus 2 performs processing of assigning the terminal apparatus 3 of the user to a communication partner of the selected robot 4 (step S203).

Next, by operating the terminal apparatus 3 and causing the terminal apparatus 3 to transmit a command with respect to the robot 4, the user operates the robot 4 selected in step S202 described above (step S204). Accordingly, the user can operate the robot 4 deployed to the location designated by the reservation for a period designated by the reservation.

As described above, with the server apparatus 2 according to the present embodiment, access authority to the robot 4 on a reserved date and time of use is granted to a user and the robot 4 to be used by the user can be selected from robots 4 corresponding to the reservation based on robot status information at the time point of the reserved date and time of use. Therefore, when a robot 4 for which a reservation has been made is to be used by the user, the robot 4 with advantageous conditions at the time point can be used.

In addition, since a reservation can be accepted for each location where the robot is to be used, a robot with advantageous conditions at the time point of use can be assigned to the user from robots conforming to the reserved location.

Furthermore, since a robot can be selected based on at least any of the start-up status of the robot, the charge status of the robot, the communication status of the robot, and the utilization status of the robot at the time point of use of the robot, an optimal robot at the time point of use can be assigned to the user from robots conforming to the reserved location.

### [Hardware configuration of computer]

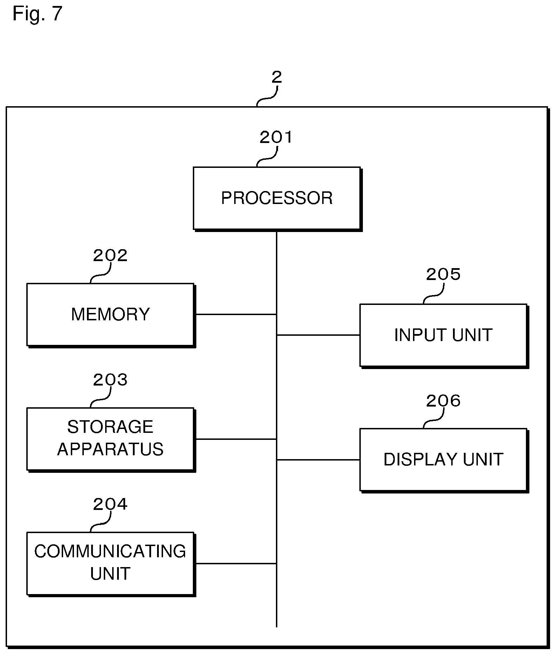

An exemplary hardware configuration of a computer (information processing apparatus) for implementing the server apparatus 2 and the terminal apparatus 3 according to the present embodiment will be described with reference to Fig. 7. While a hardware configuration of the server apparatus 2 will be described below, a hardware configuration of the terminal apparatus 3 is similar to that of the server apparatus 2.

As shown in Fig. 7, for example, the server apparatus 2 includes a processor 201, a memory 202, a storage apparatus 203, a communicating unit 204, an input unit 205, and a display unit 206 as hardware components. The server apparatus 2 need not include a part of these components. In addition, the server apparatus 2 may include components generally included in a general-purpose computer or a dedicated computer other than the components described above.

The processor 201 is, for example, a CPU (Central Processing Unit). The processor 201 is a control unit which controls various types of processing in the server apparatus 2 by executing programs stored in the memory 202. Due to cooperation between other components of the server apparatus 2 and the programs, the processor 201 realizes functions of the server apparatus 2 explained in the embodiment described above and controls execution of the processing described above.

The memory 202 is, for example, a storage medium such as a RAM (Random Access Memory). The memory 202 either temporarily reads and stores, from the storage apparatus 203 or the like, or stores in advance a program code of the program to be executed by the processor 201 and data necessary when executing the program.

The storage apparatus 203 is, for example, a non-volatile storage medium such as a hard disk drive (HDD). The storage apparatus 203 stores an operating system, various programs for realizing the components described above, data representing results of the processing described above, and the like.

The communicating unit 204 is an apparatus for performing data communication via a network with apparatuses outside the server apparatus 2 in a wireless or wired manner. The communicating unit 204 may be detachably connected to the server apparatus 2. In such a case, the communicating unit 204 is connected to the server apparatus 2 via an interface such as a USB (Universal Serial Bus).

The input unit 205 is a device for accepting an input from the user or a device for inputting data from the outside of the server apparatus 2. Specific examples of the input unit 205 include a keyboard, a mouse, a touch panel, a joystick, various sensors, wearable devices, and drive apparatuses for reading data stored in various kinds of storage media. The input unit 205 may be detachably connected to the server apparatus 2. In such a case, the input unit 205 is connected to the server apparatus 2 via an interface such as a USB.

The display unit 206 is a device for displaying various kinds of information. Specific examples of the display unit 206 include displays such as a liquid crystal display, an organic EL display, and a display of a wearable device. The display unit 206 may be detachably connected to the outside of the server apparatus 2. In such a case, the display unit 206 is connected to the server apparatus 2 via a display cable or the like. In addition, when a touch panel is adopted as the input unit 205, the display unit 206 can be integrally constructed with the input unit 205.

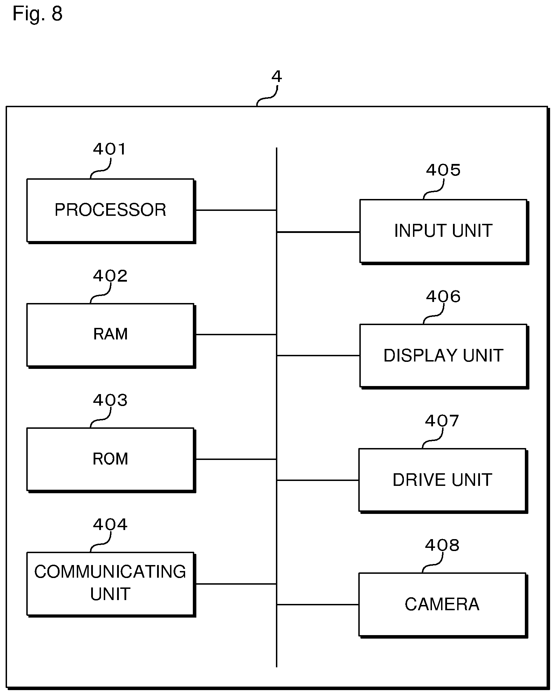

An exemplary hardware configuration of a computer (information processing apparatus) and other major components to be mounted to the robot 4 according to the present embodiment will be described with reference to Fig. 8. For example, the robot 4 includes a processor 401, a RAM 402, a ROM (Read Only Memory) 403, a communicating unit 404, an input unit 405, a display unit 406, a drive unit 407, and a camera 408 as hardware components. Note that the components shown in Fig. 8 are merely an example and the robot 4 need not include a part of these components or may include other components. For example, the robot 4 may include a speaker, a microphone, and various sensors.

The processor 401 is a computing unit of the robot 4 and is, for example, a CPU. The processor 401 is a control unit which controls execution of programs stored in the RAM 402 or the ROM 403 and which computes and processes data. For example, the processor 401 executes a program (communication program) for controlling communication via the robot. The processor 401 receives various kinds of data from the input unit 405 and the communicating unit 404 and displays a computation result of the data on the display unit 406 or stores the computation result in the RAM 402.

The communication program may be stored in and provided as a computer-readable storage medium such as the RAM 402 or the ROM 403 or may be provided over a communication network connected by the communicating unit 404. In the robot 4, the processor 401 executes the communication program to realize various operations for controlling the robot 4. Note that these physical components are exemplary and may not necessarily be discrete. For example, the robot 4 may include an LSI (Large-Scale Integration) in which the processor 401, the RAM 402, and the ROM 403 are integrated.

The RAM 402 and the ROM 403 are storage units that store data necessary for the various kinds of processing and data representing processing results. The robot 4 may include a large-capacity storage unit such as a hard disk drive in addition to the RAM 402 and the ROM 403. The communicating unit 404 is a device which performs communication with external apparatuses.

The input unit 405 is a device for inputting data from the outside of the robot 4. For example, the input unit 405 may include a keyboard and a touch panel in order to receive data input by a user. In addition, the input unit 405 may include a microphone for inputting audio.

The display unit 406 is a device for displaying various kinds of information. For example, the display unit 406 may be constituted of an LCD (Liquid Crystal Display) in order to visually display a computation result by the processor 401. The display unit 406 may display an image photographed by the camera 408 of the robot 4.

The drive unit 407 includes a remotely-operable actuator, a moving unit such as wheels, and a manipulator. When the robot 4 is a mobile robot, the drive unit 407 includes at least a moving unit such as wheels and may also include a manipulator. When the robot 4 is a wearable robot, the drive unit 407 includes at least a manipulator.

The camera 408 includes an imaging element which captures still images or moving images and transmits captured still images or moving images to an external apparatus via the communicating unit 404.

### [Modifications]

The program for implementing the system 1 (or the server apparatus 2, the terminal apparatus 3, or the robot 4) according to the present embodiment can be recorded on various computer-readable recording media including an optical disk such as a CD-ROM, a magnetic disk, and a semiconductor memory. In addition, the program can be installed or loaded onto a computer through the recording media or by downloading the program via a communication network or the like.

The present invention is not limited to the embodiment described above and can be implemented in various other forms without departing from the gist of the present invention. The embodiment described above is to be considered in all respects as illustrative and not restrictive.

### Reference Signs List

- 1: System
- 2: Server apparatus
- 3: Terminal apparatus
- 4: Robot
- 21: Reservation accepting unit
- 22: Authority granting unit
- 23: Selecting unit
- 24: Database
- 201: Processor
- 202: Memory
- 203: Storage apparatus
- 204: Communicating unit
- 205: Input unit
- 206: Display unit
- 401: Processor
- 402: RAM
- 403: ROM
- 404: Communicating unit
- 405: Input unit
- 406: Display unit
- 407: Drive unit
- 408: Camera

## Claims

1. An information processing apparatus, comprising:
a reservation accepting unit which accepts a reservation for using an unfixed robot from a user;
an authority granting unit which grants access authority to the robot to the user on a date and time of use designated by the reservation having been accepted by the reservation accepting unit; and
a selecting unit which selects, based on reservation information related to the reservation and a status of the robot, the robot to be used by the user having been granted the access authority from one or more of the robots corresponding to the reservation.

2. The information processing apparatus according to claim 1, wherein
the reservation accepting unit accepts the reservation by having the user specify a location where the robot is to be used and the date and time of use.

3. The information processing apparatus according to claim 1 or 2, further comprising:
a storage unit which stores identification information of one or more of the robots in association with a location where the robot is to be used, wherein
the reservation accepting unit presents the user with a reservation slot that is set for each location where the robot is to be used and accepts the reservation based on the reservation slot.

4. The information processing apparatus according to any one of claims 1 to 3, wherein
the status of the robot includes at least any of a start-up status of the robot, a charge status of the robot, a communication status of the robot, and a utilization status of the robot.

5. An information processing method to be executed by a processor, the method comprising:
accepting a reservation for using an unfixed robot from a user;
granting access authority to the robot to the user on a date and time of use designated by the accepted reservation; and
selecting, based on reservation information related to the reservation and a status of the robot, the robot to be used by the user having been granted the access authority from one or more of the robots corresponding to the reservation.

6. A program for causing a computer to execute:
accepting a reservation for using an unfixed robot from a user;
granting access authority to the robot to the user on a date and time of use designated by the accepted reservation; and
selecting, based on reservation information related to the reservation and a status of the robot, the robot to be used by the user having been granted the access authority from one or more of the robots corresponding to the reservation.
